Europäisches Patentamt

European Patent Office

Office européen des brevets

(11) Veröffentlichungsnummer: **0 185 802**
**B1**

(12) **EUROPÄISCHE PATENTSCHRIFT**

(45) Veröffentlichungstag der Patentschrifft:
28.02.90

(51) Int. Cl.⁵: **F 16 L 37/08, F 16 L 41/08**

(21) Anmeldenummer: **84116488.2**

(22) Anmeldetag: **28.12.84**

(54) **Verbindungsvorrichtung für Druckleitungen mit unverlierbarem Haltering.**

(43) Veröffentlichungstag der Anmeldung:
02.07.86 Patentblatt 86/27

(45) Bekanntmachung des Hinweises auf die Patenterteilung:
28.02.90 Patentblatt 90/09

(84) Bennante Vertragsstaaten:
**AT FR GB IT NL SE**

(56) Entgegenhaltungen:
**DE-A-2 922 869**
**DE-A-2 953 463**
**DE-A-3 235 058**
**DE-U-7 734 678**
**DE-U-8 205 016**
**FR-A-2 368 663**
**US-A-4 062 574**
**US-A-4 123 090**

(73) Patentinhaber: **Armaturenfabrik Hermann Voss GmbH & Co.**
**D-5272 Wipperfürth (DE)**

(72) Erfinder: **Rösch, Volker, Dr.-Ing.**
**Eisenborner Weg 37**
**D-4330 Mülheim/Ruhr (DE)**

(74) Vertreter: **Patentanwälte Dr. Solf & Zapf**
**Schlossbleiche 20 Postfach 13 01 13**
**D-5600 Wuppertal 1 (DE)**

LIBERGRAF, STOCKHOLM 1990

## Beschreibung

Die vorliegende Erfindung betrifft eine Verbindungsvorrichtung für Druckleitungen, insbesondere in Bremssystemen, bestehend aus einem Gehäuseteil und einer in dieses einschraubbaren Überwurfschraube mit einer Durchgangsbohrung, in der ein Stecker mit seinem Steckerschaft dichtend einsteckbar ist und mittels eines an der Überwurfschraube befestigten Halteringes lösbar arretiert ist, wozu der Haltering in eine Umfangsnut des Steckerschaftes eingreifende Rastzungen aufweist und vorzugsweise ein spielfreier Sitz des Halteringes in der Umfangsnut vorhanden ist.

Eine derartige Verbindungsvorrichtung ist bereits aus der DE-U-8 205 016 bekannt. Bei dieser Verbindungsvorrichtung weist der Haltering in einer Ausführungsform einen Längsschlitz auf, so daß er in seiner Öffnungsweite elastisch veränderbar ist. Der Haltering sitzt dabei in einer Umfangsnut der Überwurfschraube und wird seitlich auf die Überwurfschraube aufgeschoben, wozu er radial aufgeweitet wird und im aufgeschobenen Zustand die Überwurfschraube im Nutbereich elastisch umfaßt. Hierbei ist es jedoch nachteilig, daß der Haltering beispielsweise bei einer Demontage der Verbindungsvorrichtung verlorengehen kann. In einer weiteren Ausführungsform besitzt zwar die bekannte Verbindungsvorrichtung einen vor und nach Montage vollständig geschlossenen Haltering, allerdings weist dieser Haltering einen als Sollbruchstelle ausgebildeten, geschwächten Verbindungssteg auf, so daß der Haltering durch "Aufbrechen", d. h. durch ein radiales Aufweiten, lösbar ist. Demzufolge kann auch in diesem Fall der Haltering durch gewolltes oder auch ungewolltes Lösen von der Überwurfschraube verlorengehen.

Der vorliegenden Erfindung liegt nun die Aufgabe zugrunde, die Verbindungsvorrichtung der eingangs beschriebenen Art derart zu verbessern, daß einerseits das Arretierungsprinzip des Standes der Technik übernommen werden kann, andererseits aber eine Unverlierbarkeit des Halteringes an der Überwurfschraube stets, d. h. auch im demontierten Zustand der Verbindungsvorrichtung, gewährleistet ist, wobei insbesondere sichergestellt wird, daß übliche Normbohrungen und Verschraubungsteile bei der erfindungsgemäßen Verbindungsvorrichtung vorhanden sind.

Erfindungsgemäß wird dies dadurch erreicht, daß der Haltering einen geschlossenen, nicht aufweitbaren, oberen Ringteil aufweist, von dem aus sich die Rastzungen in Einsteckrichtung erstrecken, wobei der Ringteil mit der Überwurfschraube dadurch unlösbar verbunden ist, daß er im Preßsitz auf einem Fortsatz der Überwurfschraube und/oder formschlüssig in einer Einschnürung des Fortsatzes der Überwurfschraube sitzt. Die Befestigung des oberen Ringteils auf der Überwurfschraube durch einen Preßsitz und/oder Formschluß kann hierbei deshalb erfolgen, da der erfindungsgemäße Haltering in seinem geschlossenen Ringteil selbst nicht aufweitbar ist.

Bei dem erfindungsgemäßen Haltering sind die Rastzungen radial elastisch ausgebildet, wobei jedoch eine hinreichende Steifigkeit gewährleistet sein muß, damit bei den auftretenden axialen Beanspruchungen ausreichende Haltekräfte von den Rastzungen aufgebracht werden können.

In den Unteransprüchen sind weitere vorteilhafte Ausgestaltungen der Erfindung enthalten.

Anhand der in den beiliegenden Zeichnungen dargestellten Ausführungsbeispiele wird die Erfindung nunmehr näher erläutert. Es zeigen:

Fig. 1    einen Schnitt durch eine erfindungsgemäße Verbindungsvorrichtung,

Fig. 2    eine Teilansicht der erfindungsgemäßen Vorrichtung gemäß Fig. 1 vor dem Einschrauben der Überwurfschraube,

Fig. 3    einen Querschnitt durch eine alternative Ausführungsform einer erfindungsgemäßen Verbindungsvorrichtung,

Fig. 4    eine Teilansicht der Verbindungsvorrichtung gemäß Fig. 3 vor dem Einschrauben der Überwurfschraube,

Fig. 5    einen Schnitt durch eine weitere erfindungsgemäße Verbindungsvorrichtung,

Fig. 6    einen Schnitt durch eine weitere Ausgestaltung einer erfindungsgemäßen Verbindungsvorrichtung,

Fig. 7    eine Teilansicht der erfindungsgemäßen Vorrichtung gemäß Fig. 6 vor dem Einschrauben der Überwurfschraube,

Fig. 8    eine Ansicht des erfindungsgemäß verwendeten Halterings gemäß Fig. 7,

Fig. 9    einen Schnitt durch eine weitere alternative Ausführungsform der erfindungsgemäßen Vorrichtung und

Fig.10    eine Ansicht in Richtung des Pfeiles X in Fig. 9 auf den bei der Verbindungsvorrichtung gemäß Fig. 9 verwendeten Haltering.

In den im folgenden beschriebenen Zeichnungsfiguren sind gleiche Teile mit denselben Bezugsziffern versehen.

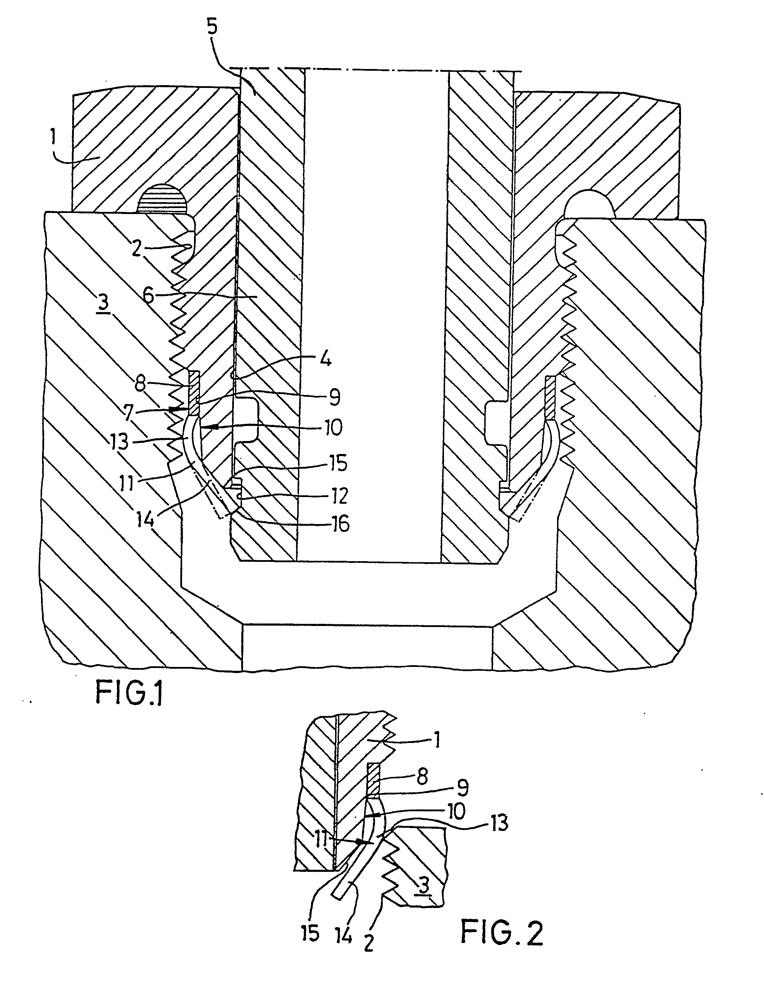

Wie sich aus Fig. 1 ergibt, besteht eine erfindungsgemäße Verbindungsvorrichtung aus einer Überwurfschraube 1, die in eine Gewindebohrung 2 eines Gehäuses 3, z. B. eines Ventilgehäuses, eingeschraubt ist. Die Überwurfschraube 1 weist eine Durchgangsbohrung 4 auf, in die ein Stecker 5 mit seinem Steckerschaft 6 eingesteckt ist. In der dargestellten eingesteckten Stellung wird der Stecker 5 durch einen Haltering 7 innerhalb der Durchgangsbohrung 4 arretiert. Der Haltering 7 besitzt einen geschlossenen oberen Ringteil 8, der auf einer Zylinderfläche 9 eines Fortsatzes 10 der Überwurfschraube 1 aufgepreßt ist. Dieses Aufpressen des Halterings 7 auf den Fortsatz 10 kann beispielsweise durch Aufschrumpfen erfolgen. Von dem Ringteil 8 erstrecken sich Rastzungen 11 des Halterings 7 in Einsteckrichtung des Steckers. Diese Rastzungen 11 übergreifen das Ende des Fortsatzes 10 bzw. der Überwurfschraube 1 und greifen in eine Umfangsnut 12 des Steckerschaftes 6 ein. In Fig. 2 ist der Verlauf der Rastzungen 11 vor dem Einschrauben der Überwurfschraube in die Gewindebohrung 2 des Gehäuses 3 dargestellt. Ebenfalls ist dieser Verlauf in Fig. 1 gestrichelt eingezeichnet. Wie sich hieraus ergibt, ist der Außendurchmesser des Ringteils 8 geringer als der Innendurchmesser der Gewindebohrung 2. Ausgehend von dem Ringteil 8 weisen die Rastzungen 11 zunächst einen konvex gebogenen Teil 13 auf, wobei die Umfangsfläche der am Ringteil 8 ausgebildeten Rastzungen im Bereich des konvexen Teiles 13 einen größeren Durchmesser besitzt als der Innendurchmesser der Gewindebohrung 2. An den konvexen Teil 13 schließt sich ein etwa gerader Zungenteil 14 an, der unter einem spitzen Winkel schräg zur Längsachse der Überwurfschraube 1 verläuft. Die Rastzungen 11 sind dabei federelastisch ausgebildet, so daß sie beim Einschrauben der Überwurfschraube 1 in die Gewindebohrung 2 radial nach innen gedrückt werden, so daß sie mit gewisser radialer Vorspannung innerhalb der Verbindungsvorrichtung im eingeschraubten Zustand der Überwurfschraube 1 angeordnet sind. Dabei wird der Verbiegeweg der Rastzungen 11 durch die konische Abschrägung 15 am Ende des Fortsatzes 10 begrenzt. Wie in Fig. 1 dargestellt ist, liegen die Rastzungen 11 mit der Stirnfläche ihres gestreckten Teiles 14 gegen die abgeschrägte Endwand 16 der Umfangsnut 12 an, so daß bei einer axial gerichteten Kraft auf den Stecker entgegengesetzt zur Einsteckrichtung, eine radiale und axiale Kraftkomponente auf die Rastzungen 11 einwirkt. Dabei wird ein Ausweichen der Rastzungen einerseits durch die Anlage an der konischen Abschrägung 15 und andererseits durch die Anlage des konvexen Teiles 13 an der Innenwandung der Gewindebohrung 2 verhindert.

Die Lösbarkeit des Steckers aus der erfindungsgemäßen Verbindungsvorrichtung wird dadurch bewirkt, daß beim Herausschrauben der Überwurfschraube 1 aus der Gewindebohrung 1 im herausgeschraubten Zustand die Rastzungen 11, wie in Fig. 2 gezeigt, zurückfedern und somit, wie in Fig. 1 gestrichelt eingezeichnet ist, nicht mehr mit ihren Enden in Eingriff mit der Umfangsnut 12 sind, so daß der Stecker herausgezogen werden kann. Somit sind erfindungsgemäß die Rastzungen 11 derart dimensioniert, daß ihr Federweg derart bemessen ist, daß die von ihnen umschlossene Durchstecköffnung im nicht eingeschraubten Zustand der Überwurfschraube ≥ dem Außendurchmesser des Steckerschaftes 6 ist. Durch diese erfindungsgemäße Ausgestaltung ergibt sich die Lösbarkeit des Steckers aus der Überwurfschraube automatisch, ohne daß hierzu zusätzliche Werkzeuge o. dgl. erforderlich sind. Der Haltering 7 ist im dargestellten Ausführungsbeispiel als Metallring ausgebildet.

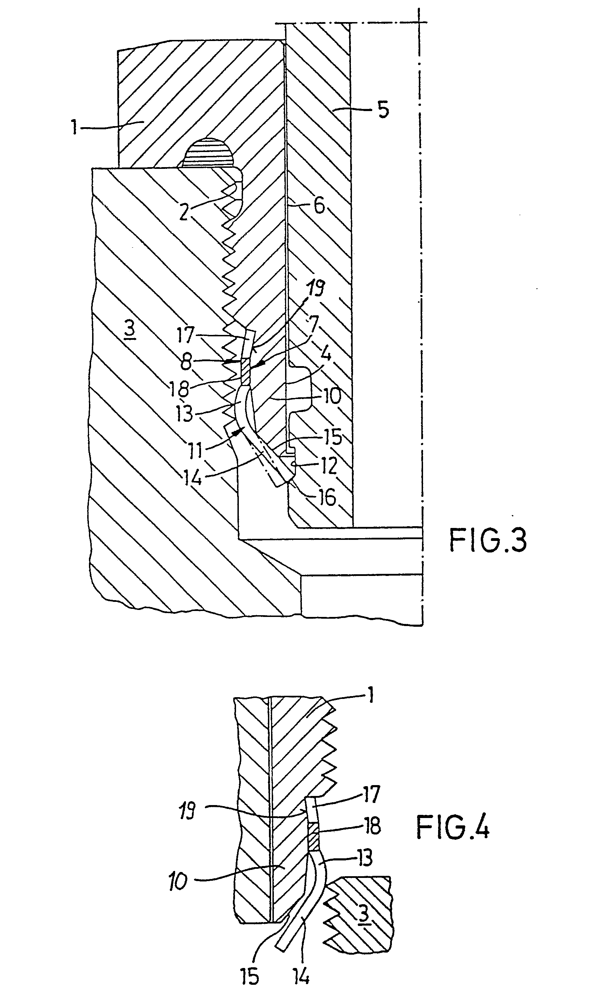

In den Fig. 3 und 4 ist eine alternative Ausführungsform des Halterings 7 dargestellt. Dabei entspricht die Ausbildung der Rastzungen 11, der der Rastzungen in den Fig. 1 und 2. Unterschiedlich zu der Ausführungsform in den Fig. 1 und 2 ist der Ringteil 8 des Halterings 7 ausgestaltet. Der Ringteil 8 weist bei dieser Ausführungsform zwei Abschnitte auf, und zwar einen in Einsteckrichtung vorderen Abschnitt 17 und einen sich daran anschließenden Abschnitt 18. Der Abschnitt 17 besitzt an seinem in Einsteckrichtung vorderen Ende einen geringeren Innendurchmesser als an seinem an den Teil 18 angrenzenden Ende, so daß der Teil 17 die Form eines Kegelstumpfes besitzt. Der Teil 17 sitzt mit Preßsitz auf einer konischen Einschnürung 19 des Fortsatzes 10 der Überwurfschraube 1, weil deren Außenkontur der Innenkontur des Abschnittes 17 entspricht. Der Innendurchmesser des Abschnittes 18 entspricht dem Außendurchmesser des Fortsatzes 10, so daß der Abschnitt 18 spielfrei auf dem Fortsatz 10 sitzt. Vor dem Aufbringen des Halterings 7 auf die Überwurfschraube 1 sind die Abschnitte 17 und 18 gleich ausgebildet, d. h., der Abschnitt 17 fluchtet zum Abschnitt 18. Nach dem Aufschieben des Halterings 7 auf den Fortsatz 10 wird der Abschnitt 17 durch radiale Krafteinwirkung in die Einschnürung 19 gedrückt, so daß der Abschnitt 17 dort mit Preßsitz gehalten wird, wodurch sich die Unlösbarkeit des Halterings ergibt.

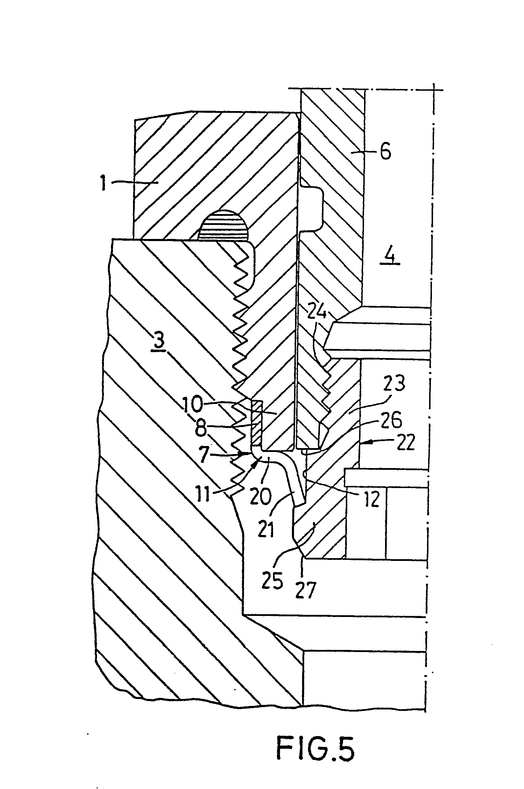

Fig. 5 zeigt eine weitere erfindungsgemäße Ausgestaltung einer erfindungsgemäßen Verbindungsvorrichtung. Hierbei ist der Haltering 7 mit seinem Ringteil 8 auf den Fortsatz 10 aufgepreßt, beispielsweise durch Aufschrumpfen. Die Rastzungen 11 sind unterschiedlich zu den Ausführungen in den Fig. 1 bis 4 ausgebildet. Diese weisen zunächst einen etwa horizontalen Bereich 20 auf, an den sich ein schräg zur Längsachse der Überwurfschraube anschließender gerader Abschnitt 21 anschließt, der funktionsmäßig und in seiner Wirkung gleich den Abschnitten 14 der Fig. 1 bis 4 ist. Durch den horizontalen Abschnitt 20 erfolgt eine Abstützung der Rastzungen an der ebenfalls horizontalen Endfläche des Fortsatzes 10. Für die Lösbarkeit dieser erfindungsgemäßen Verbindung ist vorgesehen, daß der Steckerschaft endseitig ein Einschraubstück 22 aufweist, das mit einem Gewindefortsatz 23 in ein Innengewinde 24 des Steckerschaftes 6 eingeschraubt ist. Der Innendurchmesser des Gewindes 24 ist größer als der Innendurchmesser der Durchgangsbohrung 4 und der Innendurchmesser des Gewindefortsatzes ist gleich dem Innendurchmesser der Durchgangsbohrung 4. An den Gewindefortsatz schließt sich ein Ringbund 25 an, der an seinem Umfang die Umfangsnut 12 aufweist. Dabei wird die vordere Begrenzungswand der Umfangsnut 12 durch die Endfläche 26 des Steckerschaftes 6 gebildet. Das Einschraubstück 22 weist eine vordere Abschrägung 27 auf, die dazu dient, beim Einstecken des Steckerschaftes 26 die Rastzungen 11 radial zu weiten, um auf diese Weise das Einstecken des Steckers zu ermöglichen. Durch diese erfindungsgemäße Ausgestaltung ist es möglich, nachdem die Überwurfschraube 1 aus dem Gehäuse 3 herausgeschraubt worden ist, durch Herausschrauben des Einschraubstückes 22 aus dem Steckerschaft 6 den Stecker 5 aus der Überwurfschraube herauszuziehen.

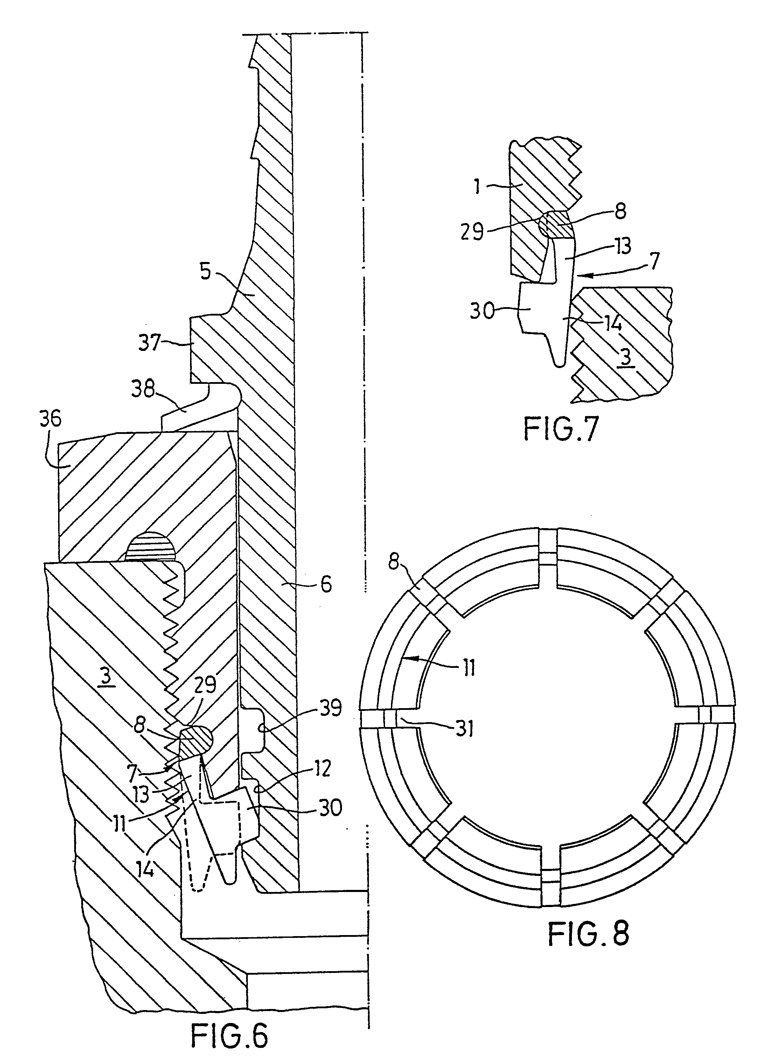

In den Fig. 6 bis 8 ist eine weitere erfindungsgemäße Ausgestaltung einer Verbindungsvorrichtung dargestellt. Dabei wird ein Haltering 7 aus Kunststoff verwendet, der hinsichtlich seiner Funktion dem Haltering der Fig. 1 bis 2 bzw. 3 bis 4 entspricht. Dieser Haltering 7 sitzt mit seinem geschlossenen Ringteil 8 in einer etwa halbkreisförmigen Einschnürung 29 des Fortsatzes 10 der Überwurfschraube 1. An den Ringteil 8 schließen sich die Rastzungen 11 an, wobei diese zunächst einen konvex gebogenen Teil 13 aufweisen, dessen Dimensionierung derjenigen des Teiles 13 in den Fig. 1 und 2 entspricht. Dabei ist in Fig. 7 wiederum die Stellung der Rastzungen 11 im nicht eingeschraubten Zustand der Überwurfschraube 1 gezeigt. In Fig. 6 ist diese Stellung gestrichelt eingezeichnet, wohingegen die in durchgeogenen Linien eingezeigte Stellung die Raststellung darstellt. An dem konvex gebogenen Teil 13 schließt sich der gestreckte Teil 14 an, an dessen Innenseite jeweils eine Rastnocke 30 ausgebildet ist. Mit dieser Rastnocke 30 greifen die Rastzungen 11 in die Umfangsnut 12 des Steckerschaftes 6 in der Arretierungsstellung ein. Der konvexe Teil 13 der Rastzungen 11 ist hinsichtlich seiner Breite derart ausgebildet, daß dort eine ausreichende Flexibilität besteht, was auch für die Ausführungsformen gemäß den Fig. 1 bis 4 gilt. Im Anschluß an den konvexen Teil ist eine Verbreiterung der Rastzungen im Bereich ihrer gestreckten Teile 14 vorgesehen, was im Falle der Kunststoffausführung gemäß den Fig. 6 bis 8 durch die Rastnocken erreicht wird. Bei den Ausführungen der Fig. 1 bis 4, wo ein metallischer Haltering 7 verwendet wird, ist eine Randstärkenvergrößerung vorgesehen, um hier die Steifigkeit zu verbessern. Wie sich insbesondere aus Fig. 8 ergibt, sind im gezeigten Ausführungsbeispiel acht Rastzungen 11 an dem Haltering 7 ausgebildet, die jeweils durch Schlitze 31 voneinander getrennt sind, wobei die Schlitze an dem Ringteil 8 enden. Eine entsprechende Anzahl von Rastzungen kann ebenfalls bei der metallischen Ausführungsform des Haltrings 7 gemäß den Fig. 1 bis 5 vorgesehen sein. Die Stirnfläche der Überwurfschraube 1 ist bei der Ausführungsform der Fig. 6 bis 8 nach innen im Sinne einer Durchmesserverringerung abgeschrägt, so daß sie als Anlagefläche für die in Einsteckrichtung vordere radiale Begrenzungsfläche des Rastnockens 30 in der Arretierstellung dient. Die in Einsteckrichtung hintere radiale Begrenzungsfläche des Rastnockens 30 dient als Anlagefläche für die schräg zur Längsachse der Überwurfschraube 1 verlaufende Endfläche der Umfangsnut 12. Da, wie bereits vorstehend ausgeführt, die Wirkungsweise dieses Halteringes derjenigen des Halteringes gemäß Fig. 1 bis 4 entspricht, ist auch seine Dimensionierung entsprechend, was einerseits das Einbiegen in die Raststellung beim Einschrauben der Überwurfschraube 1 betrifft und das selbsttätige Zurückfedern zur Freigabe des Steckerschaftes aus der Arretierstellung.

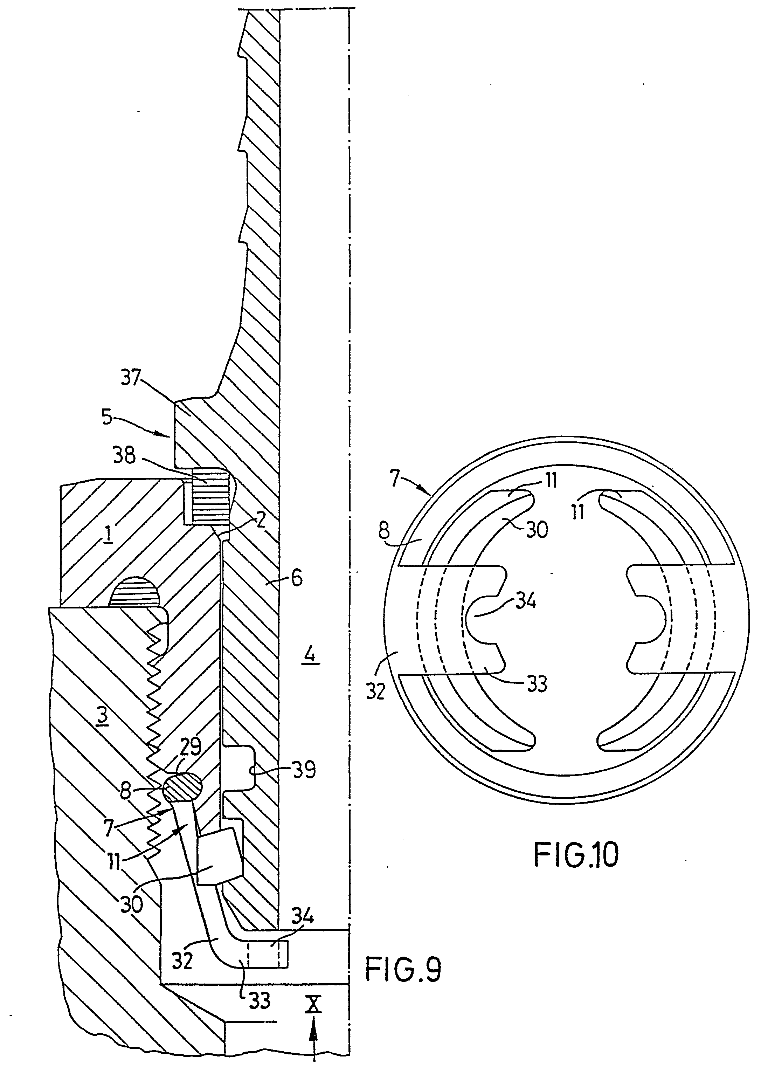

In den Fig. 9 und 10 ist eine alternative Ausführungsform einer erfindungsgemäßen Verbindungsvorrichtung dargestellt. Hierbei sitzt der Haltering 7 mit seinem geschlossenen Ringteil 8 in einer im wesentlichen halbkreisförmigen Einschnürung 29 des Fortsatzes 10 der Überwurfschraube 1. An den Ringteil 8 sind jeweils zwei gegenüberliegende kreisbogenförmige Rastzungen 11 angeformt, die schräg zur Längsachse der Überwurfschraube nach innen verlaufen.

Am Ende der Rastzungen sind Rastnocken 30 ausgebildet, die in der Arretierstellung in die Umfangsnut 12 des Steckerschaftes 6 eingreifen. Dabei sind die Rastzungen 11 und die Rastnokken 30 derart ausgebildet, daß sie eine hinreichende Steifigkeit aufweisen, um bei Beanspruchung in Längsrichtung des Steckerschaftes die auftretenden radialen und axialen Kräfte ohne Verformung, d. h. Ausweichen aus der Arretierstellung, aufzunehmen. In der Arretierstellung liegt der Steckerschaft mit der abgeschrägten Endfläche der Umfangsnut 12 an der in Einsteckrichtung hinteren schräg zur Längsrichtung des Steckers verlaufenden Endfläche der Rastnocken 30 an. Auch dieser Haltering 7 ist nach dem Aufbringen auf den Fortsatz 10 der Überwurfschraube 1 an dieser unlösbar befestigt. Zum Erweitern der Durchtrittsöffnung, die durch die Rastzungen 11 gebildet wird, weist der Steckerschaft 6 endseitig abgeschrägte Seitenflächen auf, was an sich bekannt ist.

Um ein Lösen des Steckers aus der Überwurfschraube 1 zu ermöglichen, wenn diese aus dem Gehäuse 3 herausgeschraubt worden ist, sind an den Rastzungen 11 zwei L-förmig gebogene Arme 32 ausgebildet. Diese Arme weisen an ihren radial nach innen gerichteten einander gegenüberliegenden Schenkeln 33 halbkreisförmige Ausnehmungen 34 auf. In diese Ausnehmungen 34 kann beispielsweise ein zangenartiges Spreizwerkzeug eingesetzt werden, um die Arme und damit die Rastzungen 11 auseinander zu spreizen, so daß ein Herausziehen des Steckerschaftes möglich ist. Der Haltering gemäß den Fig. 9 und 10 ist ebenfalls als Kunststoffteil ausgebildet. Die radiale Erstreckung der Schenkel 33 reicht bis zum Rand der Durchgangsbohrung des Steckers 5.

Den in den Fig. 1 bis 10 dargestellten erfindungsgemäßen Ausführungsbeispielen einer Erfindungsvorrichtung ist noch folgendes gemeinsam. Die Überwurfschraube 1 weist einen Schraubenkopf 36 auf, der beispielsweise als Sechskant ausgeführt sein kann. Der Stecker 5 weist in eingestecker Stellung oberhalb des Schraubenkopfes 36 einen ringförmigen Ansatz 37 auf. Zur Erzeugung einer axialen Vorspannung innerhalb der erfindungsgemäßen Verbindungsvorrichtung ist zwischen dem Schraubenkopf 36 und dem ringförmigen Ansatz 37 ein Federelement 38 angeordnet. In der Ausführungsform gemäß Fig. 6 handelt es sich dabei um eine Art metallischer Tellerfeder und in der Ausführungsform gemäß Fig. 9 handelt es sich um beispielsweise ein gummielastisches Federelement, das gleichzeitig zur Abdichtung dienen kann. Zur Abdichtung nach innen weist der Steckerschaft 6 eine Ringnut 39 auf, in der beispielsweise ein elastischer Dichtungsring, der als O-Ring ausgebildet sein kann, angeordnet ist. Diese Ringnut 39 ist innerhalb der Überwurfschraube 1 in der eingesteckten Stellung angeordnet.

**Patentansprüche**

1. Verbindungsvorrichtung für Druckleitungen, insbesondere in Bremssystemen, bestehend aus einem Gehäuseteil (3) und einer in dieses einschraubbaren Überwurfschraube (1) mit einer Durchgangsbohrung (4), in der ein Stecker (5) mit seinem Steckerschaft (6) dichtend einsteckbar ist und mittels eines an der Überwurfschraube (1) befestigten Halteringes (7) lösbar arretiert ist, wozu der Haltering (7) in eine Umfangsnut (12) des Steckerschaftes (6) eingreifende Rastzungen (11) aufweist und vorzugsweise ein spielfreier Sitz des Halteringes (7) in der Umfangsnut (12) vorhanden ist, *dadurch gekennzeichnet*, daß der Haltering (7) einen geschlossenen, nicht aufweitbaren, oberen Ringteil (8) aufweist, von dem aus sich die Rastzungen (11) in Einsteckrichtung erstrecken, wobei der geschlossene Ringteil (8) mit der Überwurfschraube (1) dadurch unlösbar verbunden ist, daß er im Preßsitz auf einem Fortsatz (10) der Überwurfschraube (1) und/oder formschlüssig in einer Einschnürung (29) des Fortsatzes (10) der Überwurfschraube (1) sitzt.

2. Verbindungsvorrichtung nach Anspruch 1, *dadurch gekennzeichnet*, daß im Anschluß an den Ringteil (8) die Rastzungen einen konvex ausgebildeten Teil (13) aufweisen, wobei die von den konvexen Teilen der Rastzungen gebildete Umfangsfläche einen größeren Außendurchmesser aufweist, als der Innendurchmesser der Gewindebohrung (2) des Gehäuses (3) ist, wobei die Durchmesserdifferenz derart bemessen ist, daß beim Einschrauben der Überwurfschraube (1) in die Gewindebohrung (2) eine Umbiegung des konvexen Teiles (13) im Sinne einer Durchmesserverringerung erfolgt.

3. Verbindungsvorrichtung nach Anspruch 2, *dadurch gekennzeichnet*, daß sich an den konvexen Teil (13) ein gestreckter Teil (14) der Rastzungen (11) anschließt, der im nicht eingeschraubten Zustand der Überwurfschraube (1) schräg zur Längsachse der Überwurfschraube (1) nach innen gerichtet verläuft und im eingeschraubten Zustand der Überwurfschraube mit seinem Endbereich in die Umfangsnut (12) eingreift.

4. Verbindungsvorrichtung nach einem oder mehreren der Ansprüche 1 bis 3, *dadurch gekennzeichnet*, daß der Ringteil (8) aus zwei Abschnitten (17 und 18) besteht, wobei der obere Abschnitt (17) innerhalb einer konischen Einschnürung (19) im Preßsitz gehalten wird und der in Einsteckrichtung folgende Abschnitt (18) spielfrei auf dem Fortsatz (10) der Überwurfschraube (1) angeordnet ist.

5. Verbindungsvorrichtung nach einem oder mehreren der Ansprüche 1 bis 4, *dadurch gekennzeichnet*, daß sich an den Ringteil (8) Rastzungen (11) anschließen, die aus zwei Abschnitten (20, 21) gebildet werden, wobei der sich an den Ringteil (8) anschließende Abschnitt (22) sich etwa radial nach innen erstreckt und an der Endfläche des Fortsatzes (10) der Überwurfschraube (1) anliegt und der sich daran anschließende Abschnitt (21) sich schräg zur Längsachse der Überwurfschraube bis in die Umfangsnut (12) erstreckt und die Rastzungen (11) eine derartige Steifigkeit besitzen, daß sie bei in Längsrichtung der Überwurfschraube auftretenden Belastungen weder radial noch axial ausweichen können.

6. Verbindungsvorrichtung nach einem oder mehreren der Ansprüche 1 bis 5, *dadurch gekennzeichnet*, daß der Haltering (7) aus Metall besteht.

7. Verbindungsvorrichtung nach Anspruch 2, *dadurch gekennzeichnet*, daß an den konvexen Teil (13) sich jeweils ein gestreckter Teil (14) anschließt, an dessen Innenseite Rastnocken (30) ausgebildet sind, die zumindest teilweise in der eingesteckten Stellung des Steckers (5) in die Umfangsnut (12) eingreifen.

8. Verbindungsvorrichtung nach einem oder mehreren der Ansprüche 1 bis 7, *dadurch gekennzeichnet*, daß die Wandstärke der Rastzungen (11) im Bereich des konvexen Teiles (13) insbesondere im Übergangsbereich zum gestreckten Teil (14) geringer ist als im gestreckten Teil (14).

9. Verbindungsvorrichtung nach Anspruch 1, *dadurch gekennzeichnet*, daß die Einschnürung (29) des Fortsatzes (10) der Überwurfschraube (1) im wesentlichen halbkreisförmig ausgebildet ist und an dem formschlüssig in der Einschnürung (29) sitzenden Ringteil (8) jeweils zwei gegenüberliegende kreisbogenförmige Rastzungen (11) angeformt sind, die schräg zur Längsachse der Überwurfschraube nach innen verlaufen und an deren Enden Rastnocken (30) vorhanden sind, die in der Arretierstellung in die Umfangsnut (12) des Steckerschaftes (6) eingreifen.

10. Verbindungsvorrichtung nach Anspruch 9, *dadurch gekennzeichnet*, daß die Rastzungen (11) und die Rastnocken (30) derart ausgebildet sind, daß sie eine hinreichende Steifigkeit aufweisen, um bei Beanspruchung in Längsrichtung des Steckerschaftes die auftretenden radialen und axialen Kräfte ohne Verformung aufzunehmen.

11. Verbindungsvorrichtung nach Anspruch 9 oder 10, *dadurch gekennzeichnet*, daß an den Rastzungen (11) zwei L-förmig gebogene Arme (32) angeformt sind, die an ihren radial nach innen gerichteten, einander gegenüberliegenden Schenkeln (33) halbkreisförmige Ausnehmungen (34) aufweisen, die zum Einsatz eines Spreizwerkzeuges dienen.

## Claims

1. Connecting apparatus for pressure lines, in particular in braking systems, comprising a housing part (3) and a cap screw (1) which is screwable into the latter and has a through bore (4) in which an insert (5) is insertable in sealing manner by means of its insert shaft (6) and is releasably locked by means of a holding ring (7) secured to the cap screw (1), to which end the holding ring (7) has *latching tongues* (11) engaging in a peripheral groove (12) of the insert shaft (6) and, preferably, the holding ring (7) is fitted in the peripheral groove (12) without play, characterized in that the holding ring (7) has a closed, unwidenable, upper ring part (8) from which the latching tongues (11) extend in the insertion direction, the closed ring part (8) being unreleasably connected to the cap screw (1) in that it is seated with press fit on an extension (10) of the cap screw (1) and/or is seated with form closure in a necking (29) of the extension (10) of the cap screw (1).

2. Connecting apparatus according to claim 1, characterized in that the latching tongues have a convex part (13) connected to the ring part (8), the peripheral surface formed by the convex parts of the latching tongues having a larger external diameter than the internal diameter of the threaded bore (2) of the housing (3), the difference in diameter being dimensioned such that when the cap screw (1) is screwed into the threaded bore (2) the convex part (13) undergoes a deflection in the manner of a diameter reduction.

3. Connecting apparatus according to claim 2, characterized in that there is connected to the convex part (13) an elongate part (14) of the latching tongues (11) which, in the unscrewed-in state of the cap screw (1), runs inwardly directed and oblique with respect to the longitudinal axis of the cap screw (1) and, in the screwed-in state of the cap screw, engages by means of its end region in the peripheral groove (12).

4. Connecting apparatus according to one or more of claims 1 to 3, characterized in that the ring part (8) comprises two sections (17 and 18), the upper section (17) being held with press fit within a conical necking (19) and the section (18) which follows, as seen in the insertion direction, being arranged without play on the extension (10) of the cap screw (1).

5. Connecting apparatus according to one or more of claims 1 to 4, characterized in that latching tongues (11) formed from two sections (20, 21) are connected to the ring part (8), the section (20) connected to the ring part (8) extending approximately radially inwards and lying against the end surface of the extension (10) of the cap screw (1), and the section (21) connected thereto extending obliquely with respect to the longitudinal axis of the cap screw as far as the peripheral groove (12) and the latching tongues (11) having a rigidity such that they cannot escape either radially or axially in the event of loads occurring in the longitudinal direction of the cap screw.

6. Connecting apparatus according to one or more of claims 1 to 5, characterized in that the holding ring (7) comprises metal.

7. Connecting apparatus according to claim 2, characterized in that, connected to the convex part (13), there is respectively an elongate part (14) on the inside whereof latching noses (30) are made which engage at least partially in the peripheral groove (12) in the inserted position of the insert (5).

8. Connecting apparatus according to one or more of claims 1 to 7, characterized in that the wall thickness of the latching tongues (11) is smaller in the region of the convex part (13), in particular in the region of transition to the elongate part (14), than in the elongate part (14).

9. Connecting apparatus according to claim 1, characterized in that the necking (29) of the extension (10) of the cap screw (1) is made substantially semicircular and there are integrally formed on the ring part (8) seated with form closure in the necking (29) respectively two opposing arcuate latching tongues (11) which run inwardly and obliquely with respect to the longitudinal axis of the cap screw and at the ends whereof latching noses (30) are present which engage in the peripheral groove (12) of the insert shaft (6), in the locked position.

10. Connecting apparatus according to claim 9, characterized in that the latching tongues (11) and the latching noses (30) are made such that they have a sufficient rigidity in order to take up without deformation the radial and axial forces occurring when acted upon in the longitudinal direction of the insert shaft.

11. Connecting apparatus according to Claim 9 or 10, characterized in that there are integrally formed on the latching tongues (11) two arms (32) which are bent in an L shape and which have on their radially inwardly directed, mutually opposing legs (33) semicircular cutouts (34) which serve for the use of an expander tool.

## Revendications

1. Dispositif de raccord pour conduits de pression, en particulier dans des systèmes de freinage, comprenant un boîtier (3) et une vis chapeau (1) pouvant être insérée dans celle-ci, munie d'un alésage traversant (4) dans lequel peut être introduite de manière étanche l'embout (6) d'une prise (5), cette prise étant bloquée de manière amovible au moyen d'une bague de support (7) fixée sur la vis chapeau, la bague de support (7) présentant à cet effet des languettes d'arrêt (11) s'engageant dans une rainure circonférentielle (12) de l'embout (6), la bague de support (7) étant, de préférence, insérée sans jeu dans la rainure circonférentielle, caractérisé en ce que la bague de support (7) présente une partie annulaire (8) fermée, non élargissable, à partir de laquelle les languettes d'arrêt (11) font saillie dans la direction d'enfichage, la partie annulaire fermée (8) étant reliée à la vis chapeau (1) de manière inamovible grâce au fait qu'elle est ajustée serrée sur un prolongement (10) de la vis chapeau (1) et/ou sans jeu dans un étranglement (29) du prolongement (10) de la vis chapeau (1).

2. Dispositif de raccord selon la revendication 1, caractérisé en ce que les languettes d'arrêt possèdent une partie convexe (13) faisant suite à la partie annulaire (8), la surface circonférentielle constituée par les parties convexes des languettes d'arrêt possédans un diamètre extérieur qui est supérieur au diamètre intérieur de l'alésage (2) du boîtier (3), la différence de diamètre étant prévue telle que, lorsque la vis chapeau (1) est vissée dans l'alésage fileté (2), la partie convexe (13) soit infléchie dans le sens d'une diminution du diamètre.

3. Dispositif de raccord selon la revendication 2, caractérisé en ce que la partie convexe (13) des languettes d'arrêt (11) est suivie par une partie allongée (14) qui, dans l'état non vissé de la vis chapeau (1), s'étend vers l'intérieur obliquement par rapport à l'axe longitudinal de ladite vis chapeau (1) et dont la partie d'extrémité s'engage dans la rainure circonférientelle (12) dans l'état vissé de la vis chapeau.

4. Dispositif de raccord selon l'une ou plusieurs des revendications 1 à 3, caractérisé en ce que la partie annulaire (8) est formée de deux parties (17 et 18), la partie supérieure (17) étant maintenue de manière étroitement ajustée dans l'étranglement conique (19) et la partie (18), suivant dans le sens d'enfichage, étant disposée sans jeu sur le prolongement (10) de la vis chapeau.

5. Dispositif de raccord selon l'une ou plusieurs des revendications 1 à 4, caractérisé en ce que la partie annulaire (8) est suivie de languettes d'arrêt (11) formées en deux parties (20, 21), la partie (20) faisant suite à la partie annulaire (8) s'étandant sensiblement radialement vers l'intérieur et étant appliquée sur la face terminale du prolongement (10) de la vis chapeau (1) et la partie (21) suivante s'étendant obliquement par rapport à l'axe longitudinal de la vis chapeau (1) jusque dans la rainure circonférentielle (12) et que les languettes d'arrêt (11) possèdent une rigidité telle qu'elles ne peuvent s'esquiver ni radialement, ni axialement lorsque des charges apparaissent dans la direction longitudinale de la vis chapeau.

6. Dispositif de raccord selon l'une ou plusieurs des revendications 1 à 5, caractérisé en ce que la bague de support (7) est en métal.

7. Dispositif de raccord selon la revendication 2, caractérisé en ce que la partie convexe (13) est respectivement suivie d'une partie allongée (14) sur la face intérieure de laquelle sont formées des saillies d'arrêt (30) s'engageant au moins partiellement dans la rainure circonférentielle (12) lorsque la prise est enfichée.

8. Dispositif de raccord selon l'une ou plusieurs des revendications 1 à 7, caractérisé en ce que l'épaisseur de la paroi des languettes d'arrêt (11) est plus faible que dans la partie allongée (14) à l'endroit de la partie convexe (13) et en particulier dans la partie de transition vers la partie allongée (14).

9. Dispositif de raccord selon la revendication 1, caractérisé en ce que l'étranglement (29) du prolongement (10) de la vis chapeau (1) a sensiblement la forme d'un demi-cercle et que sur la partie annulaire (8), disposée sans jeu dans l'étranglement (29), deux languettes d'arrêt (11) en arc de cercle et en regard sont formées qui s'étendent vers l'intérieur obliquement par rapport à l'axe longitudinal de la vis chapeau et aux extrémités desquelles des saillies d'arrêt (30) sont disposées, qui, dans la position d'arrêt, s'engagent dans la rainure circonférentielle (12) de l'embout (6) de la prise.

10. Dispositif de raccord selon la revendication 9, caractérisé en ce que les languettes d'arrêt (1) et les saillies d'arrêt (30) sont constituées de manière à ce qu'elles aient une rigidité suffisante pour absorber sans déformation les forces radiales et axiales apparaissant lors d'une contrainte de la tige de la prise dans la direction longitudinale.

11. Dispositif de raccord selon la revendication 9 ou 10, caractérisé en ce que sur les languettes d'arrêt (11), deux bras (32) infléchis en L sont formés qui présentent sur leurs parties (33) dirigées radialement vers l'intérieur et disposés en regard, des évidements semi-circulaires (34) qui servent à donner prise à un outil d'élargissement.

FIG.1

FIG.2

FIG.3

FIG.4

FIG.5

FIG.7

FIG.8

FIG.6

FIG.9

FIG.10